# FASCICULE DE BREVET EUROPEEN

(11) **EP 0 791 292 B1**
(45) Date de publication et mention de la délivrance du brevet: **03.04.2002**
(21) Numéro de dépôt: 97470002.3
(22) Date de dépôt: 22.01.1997
(51) Int. Cl.: A21C 3/06, A21C 7/01

(54) **Façonneuse de pâtes alimentaires pour la pâtisserie et la boulangerie**
Teigformmaschine
Dough shaper

(30) Priorité: 20.02.1996 FR 9602286
(43) Date de publication de la demande: 27.08.1997
(73) Titulaire: Etablissements Marie SA, 52200 Corlée (FR)
(72) Inventeur: Marie, Jean-Claude, 52200 Corlee (FR); Parisot, Alain, 52000 Brottes (FR); Marie, Jean-Michel, 52200 Corlee (FR)
(74) Mandataire: Poupon, Michel

(56) Documents cités:
- AU-B- 548 075
- FR-A- 2 722 654

## Description

La présente invention a pour objet une façonneuse de pâtes alimentaires pour la pâtisserie et la boulangerie.

De manière générale, une façonneuse est constituée notamment d'une trémie où l'on introduit la pâte à former, d'un distributeur de pâte, d'un dispositif de formage et d'un tapis feutre qui fait avancer au fur et à mesure la pâte dans le processus de formage.

Le problème de ce type de machines est que l'on rencontre des difficultés pour le nettoyage et/ou l'entretien des tapis feutres qui ne sont pas d'accès facile dans la façonneuse. Cette lourdeur de maintenance est une cause de pertes de productivité, le nettoyage et/ou les réparations des tapis feutres de la façonneuse immobilisant longuement la chaîne de fabrication des produits raffinés.

L'invention se propose de remédier à ces inconvénients en réduisant au minimum le temps d'immobilisation de la façonneuse lors de la maintenance des tapis feutres de ladite façonneuse.

On connaît dans l'art antérieur le document FR-A-2 722 654 montrant dans une façonneuse horizontale un tapis monté dans une cartouche apte à coulisser parallèlement à la direction longitudinale du tapis entre une position active et une position de nettoyage.

Cette technique à tapis coulissant ne peut être appliquée aux façonneuses du type de l'invention en raison des vibrations auxquelles sont soumis les tapis et les moyens qui les supportent.

La présente invention remédie à ce problème en proposant un système à caissons extractibles permettant une parfaite stabilité des caissons malgré les vibrations.

L'invention palie tous les inconvénients cités grâce à une façonneuse pour pâtes de boulangerie ou de pâtisserie, caractérisée en ce qu'elle consiste essentiellement en des caissons extractibles (1a, 1b) comportant essentiellement un tapis feutre (8) et deux cylindres d'entraînement (7a et 7b), et en un corps de façonneuse (2) contenant un système moteur (6) où viennent s'emboîter lesdits caissons extractibles, lesdits caissons extractibles (1a) et (1b) s'emboîtant dans le corps de la façonneuse (2) grâce à un système de fixation constitué d'une part de rainures (3) et d'autre part par un jeu de lamelles (4) sur le corps de la façonneuse de même dimension que les rainures du caisson extractible et qui s'adaptent aux dites rainures.

On comprendra mieux l'invention à l'aide de la description faite ci-après d'un mode de mise en oeuvre donné à titre d'exemple non limitatif, en référence aux dessins annexés dans lesquels :
- la **figure 1** est une vue en éclaté et en perspective d'un caisson extractible et du corps de la façonneuse où vient s'emboîter les caissons extractibles,
- la **figure 2** est une vue schématique d'une façonneuse en fonction comportant des caissons extractibles emboîtés.

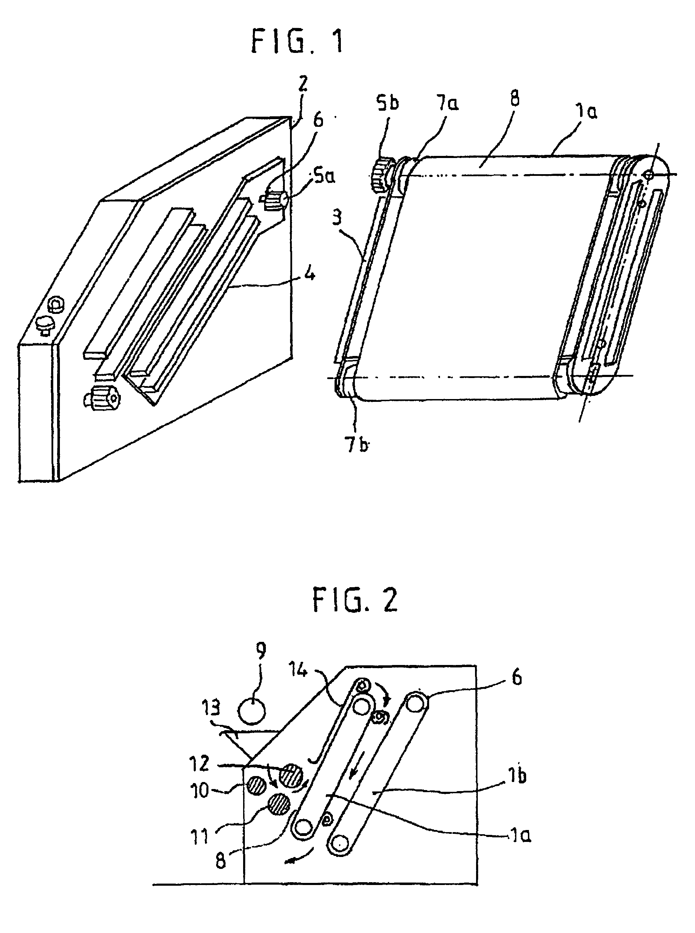

En référence à la figure 1, on notera que le caisson extractible (1a) vient s'emboîter dans le corps de la façonneuse (2) grâce à un système de fixation constitué d'une part de rainures (3), dans notre exemple sur le côté du caisson extractible (1a) s'emboîtant dans le corps de la façonneuse et d'autre part par un jeu de lamelles (4) sur le corps de la façonneuse de même dimension que les rainures du caisson extractible et qui s'adaptent parfaitement auxdites rainures. Ce système de fixation facilite le montage et le démontage du caisson extractible (1a) et permet une parfaite stabilité du caisson extractible malgré les vibrations produites par le dispositif moteur du tapis feutre. Le montage et le démontage du caisson extractible (1b) se fait de la même manière. Les deux caissons comportent également des vis (non représentées) permettant le blocage desdits caissons.

Le tapis feutre du caisson extractible est mû grâce à un système de poulies. Dans notre exemple, une poulie dentée (5a) est rattachée au système moteur (6) présent dans le corps de la façonneuse et transmet un mouvement rotatif au tapis feutre du caisson extractible par l'intermédiaire d'une poulie (5b) dans le prolongement du cylindre d'entrainement (7a) du tapis feutre quand le caisson est emboîté au corps de la façonneuse.

Sur la figure 2, on voit la façon dont sont agencés les différents caissons et le trajet que fait la pâte (9) après son introduction dans la façonneuse.

La pâte (9) est introduite dans la façonneuse par l'intermédiaire d'une ouverture dans la goulotte (13), elle tombe sur un rouleau libre entraîné (10) qui pousse la pâte dans des rouleaux de laminage (11,12).

La pâte est laminée selon la nature et la grosseur du roulage à obtenir. En sortie de laminage, la pâte est entraînée par un tapis feutre (8) sous le tapis libre et le tapis lourd (14) ; à ce moment-là, la pâte est roulée.

En sortie du caisson avant (1a), la pâte tombe entre les deux caissons (1a,1b). La rotation entre les caissons s'effectue en sens inverse.

Le caisson arrière (1b) est monté dans un support réglable permettant de régler l'écartement entre les tapis (8) du caisson avant (1a) et du caisson arrière (1b) en fonction de la grosseur et de la longueur de la baguette à obtenir.

Il est facile à tout moment de stoper le processus de façonnage et de retirer le caisson extractible afin soit de nettoyer le tapis feutre du caisson extractible, soit de le remplacer pour permettre la continuation du processus de façonnage soit de réparer le caisson extractible à l'écart de la machine et donc de façon plus aisée.

## Revendications

1. Façonneuse pour pâtes de boulangerie ou de pâtisserie consistant en des caissons extractibles (1a, 1b) comportant un tapis feutre (8) et deux cylindres d'entraînement (7a et 7b), et en un corps de façonneuse (2) contenant un système moteur (6) où viennent s'emboîter lesdits caissons extractibles, **caractérisée en ce** lesdits caissons extractibles (1a, 1b) s'emboîtant dans le corps de la façonneuse (2) grâce à un système de fixation constitué d'une part de rainures (3) et d'autre part par un jeu de lamelles (4) sur le corps de la façonneuse de même dimension que les rainures du caisson extractible et qui s'adaptent aux dites rainures.

2. Façonneuse selon la revendication 1, **caractérisée en ce qu'**une poulie dentée (5a) est rattachée au système moteur (6) présent dans le corps de la façonneuse et qu'une poulie dentée (5b) est dans le prolongement du cylindre d'entraînement (7a) du tapis feutre quand le caisson est emboîté au corps de la façonneuse.

3. Façonneuse selon l'une des revendications 1 à 2, **caractérisée en ce qu'**un des caissons est monté sur un support réglable pour régler l'écartement entre les tapis (8) des deux caissons (1a, 1b).

## Patentansprüche

1. Formmaschine für Teige von Bäckereien oder Konditoreien, welche aus herausziehbaren Kassetten (1a, 1b) mit einem Filzband (8) und zwei Mitnehmerwalzen (7a, 7b) besteht und die ein Formmaschinengehäuse (2) aufweist, das ein Antriebssystem (6) beinhaltet, welches sich in die genannten herausziehbaren Kassetten einfügen lässt, **dadurch gekennzeichnet, dass** die genannten herausziehbaren Kassetten (1a, 1b) in das Formmaschinengehäuse (2) dank eines Haltesystems einsetzbar sind, welches einerseits durch Nuten (3), andererseits durch einen Satz von Lamellen (4) am Formmaschinengehäuse gebildet ist, die gleiche Abmessungen wie die Nuten der herausziehbaren Kassetten aufweisen und die in die genannten Nuten passen.

2. Formmaschine nach Anspruch 1, **dadurch gekennzeichnet, dass** eine Zahnrolle (5a) mit dem Antriebssystem (6) im Formmaschinengehäuse verbunden ist und dass eine Zahnrolle (5b) sich in der Verlängerung der Mitnehmerwalze (7a) des Filzbandes befindet, wenn die Kassette im Formmaschinengehäuse eingesetzt ist.

3. Formmaschine nach einem der Ansprüche 1 bis 2, **dadurch gekennzeichnet, dass** eine der Kassetten zum Einstellen des Abstandes zwischen den Bändern (8) der beiden Kassetten (1a, 1b) auf einer einstellbaren Halterung sitzt.

## Claims

1. Shaper for bakery or pastry doughs consisting of extractable boxes (1a, 1b), which comprise a felt covering (8) and two entrainment cylinders (7a and 7b), and a shaper body (2) which contains a drive system (6) into which said extractable boxes fit, **characterised in that** said extractable boxes (1a, 1b) engage in the body of the shaper (2) by means of a securing system made up, on the one hand, of grooves (3) and, on the other hand, of a set of strips (4) on the body of the shaper of the same dimension as the grooves of the extractable box and which are adapted to said grooves.

2. Shaper according to claim 1, **characterised in that** a toothed pulley (5a) is attached to the drive system (6) present in the body of the shaper, and **in that** a toothed pulley (5b) is in the extension of the entrainment cylinder (7a) of the felt covering when the box is engaged in the body of the shaper.

3. Shaper according to one of claims 1 to 2, **characterised in that** one of the boxes is mounted on an adjustable carrier to adjust the spacing between the coverings (8) of the two boxes (1a, 1b).
